# EUROPEAN PATENT APPLICATION

(11) **EP 0 933 543 A2**
(43) Date of publication of application: **04.08.1999**
(21) Application number: 99300282.3
(22) Date of filing: 15.01.1999
(51) Int. Cl.: F16C 17/18, F16C 27/02

(54) **Bearing**

(30) Priority: 16.01.1998 GB 9800867
(71) Applicant: Nylacast Limited, Leicester LE5 0HD (GB)
(72) Inventor: Fraser, Michael, Leicester LE5 6RA (GB)
(74) Representative: Stagg, Diana Christine

(57) **Abstract**

A journal bearing comprises a shaft (12) mounted for rotation within a bearing housing (10), a strip (16) of elongate material having a regularly arranged pattern therein being interposed between and engaging the annular space between the shaft (12) and housing (10), the material having self lubrication properties. The strip pattern is preferably a zig zag pattern, the height and length of the strip being selected in dependence upon the spacing between the shaft and housing and the circumference of the annulus.

## Description

The present invention relates to a bearing particularly, but not exclusively, a journal bearing.

A bearing is a support provided to hold a revolving shaft in its correct position. A journal bearing is one type of bearing and is used for horizontal shafting, the load on the bearing being due to the weight of the shaft or to forces acting on the shaft in a direction perpendicular to its axis.

Relative movement between the shaft and bearing results in a loss of energy through friction. For light loads on the bearing and low speeds of revolution the frictional loss is small so that simple and inexpensive bearings may be used. For heavy loads and high speeds, however, more sophisticated bearings are required.

In a plain bearing the surface of the shaft slides over the fixed bearing surface, lubrication being provided between the bearing surfaces to reduce frictional losses. Lubrication can be provided from an oil-cup which drips oil into the bearing end, oil grooves cut in the surface of the bearing assisting in the distribution of oil around the surface of the shaft.

More advanced, is a ball and roller bearing which consists of a plurality of spherical balls rolling between two accurately machined surfaces known as ball races. In a journal bearing the races are cylindrical, the inner races fitting on the shaft and the outer races being fixed in the housing of the bearing. A groove is provided so that the balls are confined to their proper relative positions by a cage into which the balls are fitted and which rotates with the balls between the two races.

In a ball and roller bearing the action is that of one body rolling over another as distinct from the sliding action of the plain bearing. Thus, the ball bearing has less friction losses and no lubrication problem since the balls will roll in the races with just as little friction whether dry or lubricated.

A disadvantage of ball and roller bearings is their cost in terms of the accurate machining needed in the manufacturing process and it becomes desirable therefore to look for an alternative construction.

In accordance with one aspect of the present invention there is provided a journal bearing comprising a shaft mounted for rotation within a bearing housing, a strip of elongate material having a regularly arranged pattern therein being interposed between and engaging the annular space between the shaft and housing, said material having self lubrication properties.

In a preferred embodiment of the invention the strip pattern is a zig-zag pattern, the height and length of the strip being selected in dependence upon the spacing between the shaft and housing and the circumference of the annulus.

The strip may be manufactured form a metal such as brass or bronze or alternatively a material such as nylon or PTFE.

It has been found by experimentation that it is desirable, in use, for the individual limbs of the zig-zag strip to lie at a relatively tight angle to a radial plane passing through a strip trough.

Where the strip is made from a mouldable or castable material it is preferably produced in a continuous process. Where the strip is continuously extruded, the process cannot be facilitated by the use of a lubricant since the extrusion temperatures involved would evaporate the lubricant. Hence a continuous casting process is performed which involves the use of lower temperatures and does not require lubrication. When a rectilinear strip is produced, the strip may be passed to a crimping station to enable the zig-zag or other pattern to be imparted to it.

The invention will now be described with reference to the accompanying drawings in which:
Figure 1 is a cross sectional view of a journal bearing according to the invention,
Figure 2 is a cross sectional view similar to Figure 1 with the same diameter bearing housing but a smaller shaft diameter, and
Figure 3 is a side elevation of a zig-zag strip in extended form for use in a bearing according to the invention.

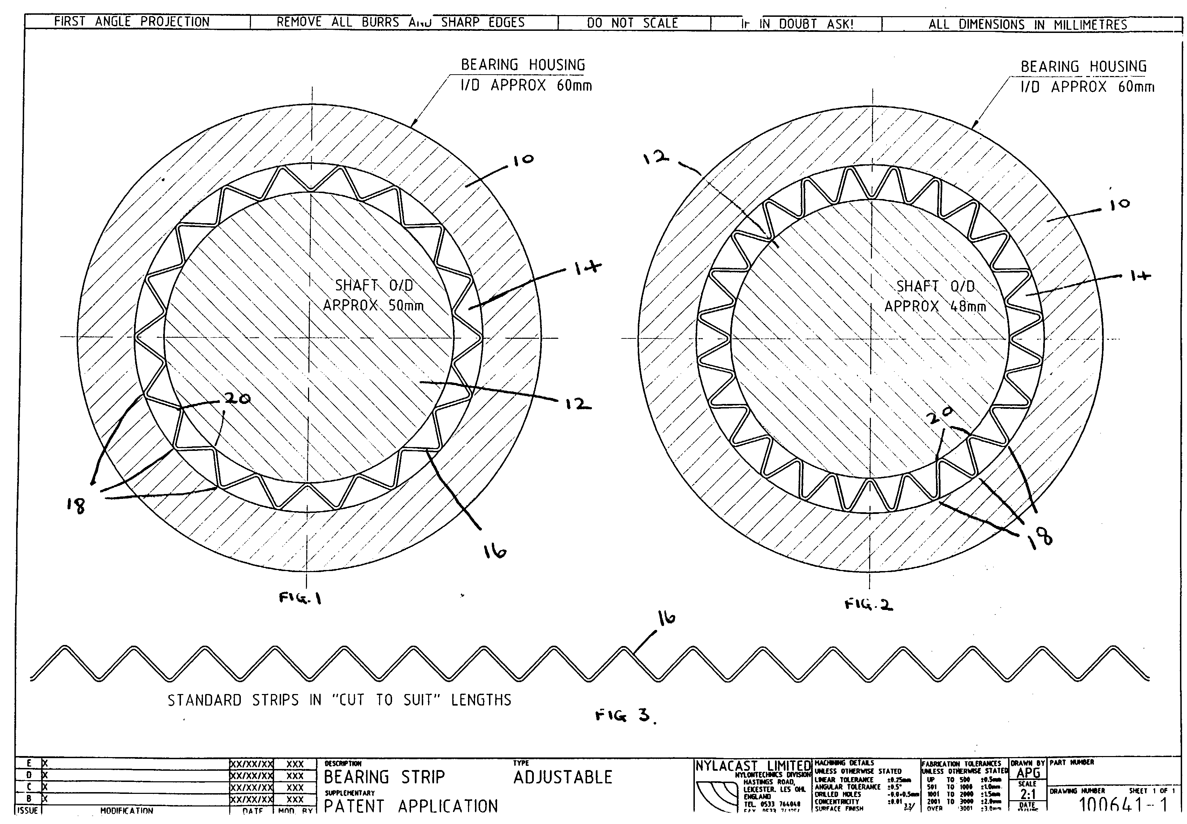

In Figure 1 a bearing housing is designated 10 and is of approximately 60mm internal diameter. A shaft 12 is rotatably mounted within the bearing housing, the shaft having an outer diameter of approximately 50mm. Hence there is an annular chamber 14 between the housing 10 and the shall 12 having a radial width of approximately 1Omm. A length of zigzag strip 16 is positioned within the annular chamber 14 and extends along the whole length of the annulus. It will be seen that the strip has troughs 18 and peaks 20 uniformly spread along the length of the annulus, the troughs 18 contacting the housing 10 and the peaks 20, the shaft 12. Thus the strip maintains coaxial alignment between the shaft and the housing.

The strip is produced by continuously casting nylon. Subsequently to setting, preferably prior to full thermal setting of the nylon, the strip is passed to a crimping station (not shown) where the zig-zag pattern is imparted to it. Standard lengths of strip are cut from the continuous strip length to suit different bearing sizes.

It will be appreciated that the frictional contact between strip and shaft is small and that because of the natural lubricating properties of the nylon, no separate lubricating medium such as oil is needed. A significant advantage of the bearing according to the present invention is that no precision machining is needed prior to the bearing being assembled.

Referring now to Figure 2, the same reference numerals have been used to designate similar parts to those of Figure 1. The essential difference between the two figures is that the outer diameter of the shaft 12 is approximately 48mm and the inner diameter of the bearing housing 10 the same as that of Figure 1 so that the radial width of the annular chamber is greater at 12mm. Hence, the pitch of the zig-zag strip 16 is greater in the Figure 2 embodiment.

## Claims

1. A journal bearing comprising a shaft mounted for rotation within a bearing housing, a strip of elongate material having a regularly arranged pattern therein being interposed between and engaging the annular space between the shaft and housing, said material having self lubrication properties.

2. A journal bearing as claimed in claim 1 in which the strip pattern is a zig zag pattern, the height and length of the strip being selected in dependence upon the spacing between the shaft and housing and the circumference of the annulus.
